# EUROPÄISCHE PATENTANMELDUNG

(11) **EP 2 420 908 A1**
(43) Veröffentlichungstag der Anmeldung: **22.02.2012**
(21) Anmeldenummer: 10173181.8
(22) Anmeldetag: 18.08.2010
(51) Int. Cl.: G05B 23/02

(54) **Automatisierungseinrichtung und Verfahren zum Betreiben und zur Vorhersage deren Betriebsdauer**

(71) Anmelder: SIEMENS AKTIENGESELLSCHAFT, 80333 München (DE)
(72) Erfinder: Abert, Michael, 76474, Au (DE)

(57) **Zusammenfassung**

Die Erfindung betrifft ein Verfahren zum Betreiben einer Automatisierungseinrichtung (2), die mehrere Automatisierungskomponenten (4 bis 7, 9 bis 11) umfasst, wobei anhand mindestens einer der Automatisierungseinrichtung (2) zugänglichen Einflussgrößen, welche die mittlere Betriebsdauer zwischen Ausfällen und/oder die Brauchbarkeitsdauer mindestens einer der Automatisierungskomponenten (4 bis 7, 9 bis 11) beeinflusst, eine Vorhersage einer bevorstehenden Funktionsbeeinträchtigung und/oder eines bevorstehenden Ausfalls dieser mindestens einen Automatisierungskomponente (4 bis 7, 9 bis 11) und/oder der Automatisierungseinrichtung (2) abgeleitet wird, wobei die mindestens eine Einflussgröße während der Steuerung eines technischen Prozesses zyklisch oder zu vorgegebenen Zeiten erfasst wird. Es werden Maßnahmen vorgeschlagen, mittels denen eine Vorhersage einer bevorstehenden Funktionsbeeinträchtigung und/oder eines bevorstehenden Ausfalls einer Automatisierungskomponente (4 bis 7, 9 bis 11) und/oder einer Automatisierungseinrichtung (2) besser abgeleitet werden kann.

## Beschreibung

Die Erfindung betrifft ein Verfahren zum Betreiben einer Automatisierungseinrichtung gemäß dem Oberbegriff des Anspruchs 1. Darüber hinaus betrifft die Erfindung eine Automatisierungseinrichtung, die zur Durchführung des Verfahrens geeignet ist.

In der Automatisierungstechnik ist es gewöhnlich erwünscht, aus den Angaben von Herstellern von Automatisierungskomponenten einer Automatisierungseinrichtung, beispielsweise Angaben über die zulässige Betriebstemperatur oder die zulässige Luftfeuchtigkeit, die mittlere Betriebsdauer zwischen Ausfällen der jeweiligen Automatisierungskomponente (Mean Time Between Failure - im Folgenden mit "MTBF" bezeichnet) und/oder deren Brauchbarkeitsdauer manuell oder mittels eines Software-Werkzeugs zu berechnen. Mittels dieser Berechnung ist es möglich, eine Aussage über die MTBF und/oder die Brauchbarkeitsdauer der Automatisierungseinrichtung zu treffen; denn die MTBF der Automatisierungseinrichtung ergibt sich aus dem Kehrwert der Summe der Ausfallraten der Automatisierungskomponenten. Die Automatisierungskomponente mit der geringsten Brauchbarkeitsdauer bestimmt die Brauchbarkeitsdauer der Automatisierungseinrichtung. Als Automatisierungskomponente werden in diesem Zusammenhang beispielsweise Sensoren und/oder Aktoren sowie Baugruppen oder Module einer speicherprogrammierbaren Steuerung angesehen, z. B. Module in Form eines CPU-, Kommunikations-, Ein-/Ausgabe-Moduls oder eines sonstigen zum Betrieb eines zu steuernden technischen Prozesses oder zum Steuern einer technischen Anlage erforderlichen Funktionsmoduls. Die Berechnung der mittleren Betriebsdauer und/oder der Brauchbarkeitsdauer einer Automatisierungskomponente kann mittels eines Software-Werkzeugs eines Engineering-Systems im Rahmen einer Projektierungsphase erfolgen, während der ein Anwender zur Lösung einer Automatisierungsaufgabe eine Automatisierungseinrichtung konfiguriert und dazu geeignete Hard- und Software-Automatisierungskomponenten aus einer Hard- und Softwarebibliothek auswählt und diese Komponenten parametriert. Lebensdauer verkürzende oder verlängernde Einflüsse, die im späteren Betrieb der Automatisierungseinrichtung auftreten können oder zu erwarten sind, beispielsweise erhöhte Betriebstemperaturen oder erhöhte oder geringere elektrische Belastungen, können im Rahmen dieser Berechnung berücksichtigt werden.

Es kann nun vorkommen, dass während der Steuerung eines technischen Prozesses die tatsächlichen Lebensdauer verkürzenden Einflüsse mit den in der Projektierungsphase erwarteten Einflüssen nicht übereinstimmen, z. B. deshalb, weil die Umgebungstemperatur 60 °C erreicht, allerdings nur 40 °C erwartet wurden und diese erwartete Umgebungstemperatur im Rahmen der Berechnung berücksichtigt wurde. Eine derartig erhöhte Umgebungstemperatur führt zu einer Verkürzung der mittleren Betriebsdauer zwischen Ausfällen einer Automatisierungskomponente und/oder zu einer Verkürzung der Brauchbarkeitsdauer dieser Automatisierungskomponente, wobei mit einer Verkürzung um einen Faktor 2 ohne weiteres gerechnet werden kann.

Ein Verfahren gemäß dem Oberbegriff des Anspruchs 1 ist aus der EP 1 442 339 B1 bekannt. Dort werden Maßnahmen vorgeschlagen, mittels denen Fehlfunktionen bei technischen Anlagen vermieden oder minimiert werden.

Der vorliegenden Erfindung liegt die Aufgabe zugrunde, ein Verfahren der eingangs genannten Art anzugeben, mittels dem eine Vorhersage einer bevorstehenden Funktionsbeeinträchtigung und/oder eines bevorstehenden Ausfalls einer Automatisierungskomponente und/oder einer Automatisierungseinrichtung besser abgeleitet werden kann. Darüber hinaus ist eine Automatisierungseinrichtung zur Durchführung des Verfahrens zu schaffen.

Bezüglich des Verfahrens wird diese Aufgabe durch die im kennzeichnenden Teil des Anspruchs 1, in Bezug auf die Automatisierungseinrichtung durch die im kennzeichnenden Teil des Anspruchs 4 angegebenen Maßnahmen gelöst.

Vorteilhaft ist, dass in der Automatisierungskomponente stets Angaben hinterlegt sind, die deren aktuelle mittlere Betriebsdauer zwischen Ausfällen und/oder ihre aktuelle Brauchbarkeitsdauer repräsentieren. Eine derartige Automatisierungskomponente kann aus einer Automatisierungseinrichtung entfernt und in einer weiteren Automatisierungseinrichtung eingesetzt werden, wobei die in der Automatisierungskomponente hinterlegten Angaben genutzt werden, um eine Vorhersage einer bevorstehenden Funktionsbeeinträchtigung und/oder eines bevorstehenden Ausfalls dieser weiteren Automatisierungseinrichtung ableiten zu können. Mit anderen Worten: Eine "gebrauchte" Automatisierungskomponente weist ihren "Lebenslauf" auf und kann zu jeder Zeit in einer anderen Automatisierungseinrichtung eingesetzt werden, wobei die in dieser Komponente hinterlegten Angaben für die Gesamtberechnung, d. h. für die MTBF-Berechnung und/oder Brauchbarkeitsdauer dieser anderen Automatisierungseinrichtung, berücksichtigt werden können.

In einer Ausgestaltung der Erfindung ist vorgesehen, zur Vorhersage der bevorstehenden Funktionsbeeinträchtigung und/oder des bevorstehenden Ausfalls der mindestens einen Automatisierungskomponente deren Lagerhaltungsdauer zu berücksichtigen, wobei die Lagerhaltungsdauer ebenfalls in der Automatisierungskomponente gespeichert wird. Dadurch kann sowohl im Hinblick auf die Automatisierungskomponente als auch auf die Automatisierungseinrichtung die Vorhersage besser abgeleitet werden. Im Rahmen einer Erst- oder Wiederinbetriebnahme wird z. B. die Lagerhaltungsdauer aus den ermittelten Tagen ab dem Datum der letzten Aktualisierung (letzter Eintrag der MTBF) bis zu dem aktuellen Datum und - falls bereits hinterlegt - aus vorher bereits eingetragenen Lagerzeiten berechnet und in einem nichtflüchtigen Speicher der Automatisierungskomponente hinterlegt. Alle in Tagen ermittelten Stillstandszeiten sind dann als Lagerzeiten bzw. Lagerhaltungsdauer erfasst. Ein "Datum-Initialwert" für die Ermittlung der Lagerzeit nach Auslieferung kann bereits beim Hersteller in das Modul geladen bzw. eingetragen werden (Herstelldatum).

Weitere vorteilhafte Ausgestaltungen der Erfindung ergeben sich aus den weiteren Unteransprüchen.

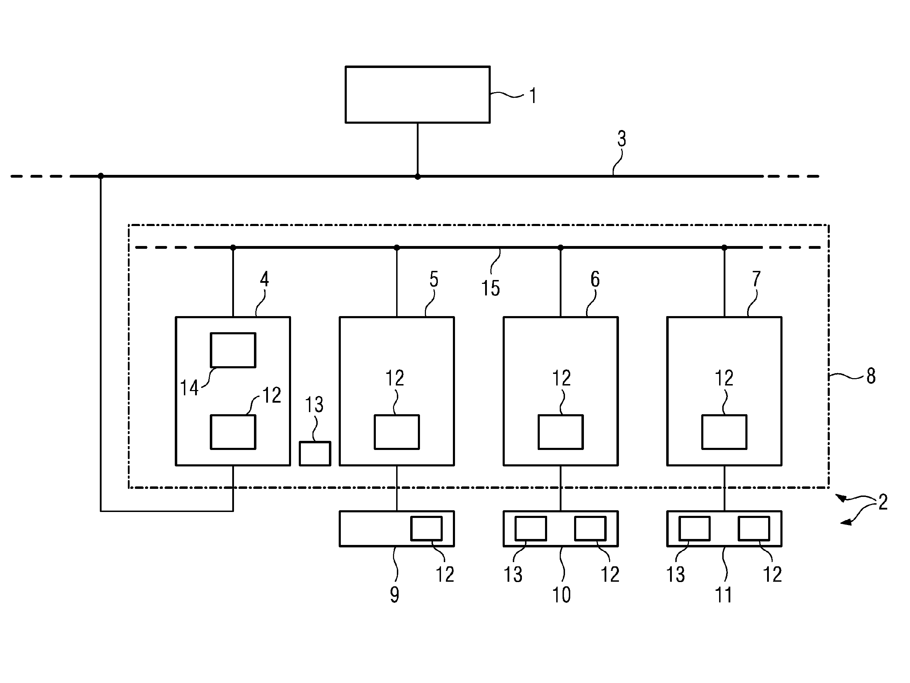

Die Erfindung wird nachfolgend anhand eines Ausführungsbeispiels unter Bezugnahme auf die einzige Figur der Zeichnung näher erläutert. Die Figur der Zeichnung zeigt in vereinfachter Form eine Anordnung mit einem Engineering-System und einer Automatisierungseinrichtung.

Ein mit 1 bezeichnetes Engineering-System und eine mittels eines Software-Werkzeugs des Engineering-Systems 1 projektierte und konfigurierte Automatisierungseinrichtung 2 sind über ein Bussystem 3 und hier nicht dargestellte Busanschaltungen miteinander verbunden. Die Automatisierungseinrichtung 2 umfasst unterschiedliche Automatisierungskomponenten in Form eines mehrere Module 4, 5, 6, 7 aufweisenden Automatisierungsgerätes 8 und ferner an die Module 5 bis 7 angeschlossene Aktoren und Sensoren 9, 10, 11 sowie weitere zur Steuerung einer technischen Anlage erforderliche, hier nicht dargestellte Automatisierungskomponenten. Das Automatisierungsgerät 8 weist einen Rückwandbus 15 auf, an welchen die Module 4 bis 7 angeschlossen sind und über welchen die Module 4 bis 7 Informationen austauschen, wobei im vorliegenden Beispiel das Modul 4 als CPU-, das Modul 5 als Eingabe- und die Module 6, 7 als Ausgabe-Module ausgebildet sind. Das Automatisierungsgerät 8 kann unterschiedlich ausgebildet sein. So sind gewöhnlich Automatisierungsgeräte zur Lösung kleiner, mittlerer und größerer Automatisierungsaufgaben innerhalb der Automatisierungseinrichtung 2 vorgesehen, wobei zur Lösung kleiner Automatisierungsaufgaben mikro-speicherprogrammierbare Steuerungen, zur Lösung mittlerer Automatisierungsaufgaben speicherprogrammierbare Kleinsteuerungen und zur Lösung komplexerer Automatisierungsaufgaben leistungsstarke speicherprogrammierbare Steuerungen einsetzbar sind. Je nach Aufgabenstellung ist es darüber hinaus möglich, mehrere Automatisierungsgeräte vorzusehen, die über einen hier nicht dargestellten Bus gekoppelt sind. Mit welchen Hard- und Softwarekomponenten, d. h. mit welchen Automatisierungsgeräten, Bussystemen, Aktoren und Sensoren, und mit welchen Software-Bausteinen und/oder Steuerprogrammen die Automatisierungseinrichtung 2 zu versehen ist, ist abhängig von der Komplexität der zu steuernden technischen Anlage und der Steueraufgabe, wobei die erforderlichen Hard- und Softwarekomponenten der Automatisierungseinrichtung 2 durch das Engineering-System 1 projektierbar und/oder konfigurierbar sind.

Das Software-Werkzeug des Engineering-Systems 1 ist ferner dazu ausgebildet, im Rahmen der Projektierungsphase aus Herstellerangaben über die Module 4 bis 7 sowie den Sensor 9 und die Aktoren 10, 11 und aus erwarteten Einflussgrößen in einer geplanten Anlagen- bzw. Prozessumgebung für jede dieser Komponenten eine MTBF sowie eine Brauchbarkeitsdauer zu ermitteln und in jeweilige Speicher 12 der Komponenten zu hinterlegen. Derartige Einflussgrößen sind beispielsweise physikalische Größen wie Temperatur, Druck oder Feuchtigkeit sowie zeitliche Änderungen dieser Größen. Aus diesen Größen leitet das Software-Werkzeug jeweils eine Vorhersage einer bevorstehenden Funktionsbeeinträchtigung und/oder eines bevorstehenden Ausfalls der jeweiligen Komponenten 4 bis 7, 9 bis 11 und/oder der Automatisierungseinrichtung 2 ab. Geeignete Algorithmen zur Berechnung der MTBF und der Brauchbarkeitsdauer der jeweiligen Komponenten oder der Automatisierungseinrichtung und zur Vorhersage sind an sich bekannt und es wird daher auf diese Berechnungen nicht näher eingegangen.

Die in den Speichern 12 der Komponenten 4 bis 7, 9 bis 11 hinterlegten Angaben werden aktualisiert, indem zunächst während der Steuerung des technischen Prozesses geeignete Sensoren in definierten Zeitabständen die aktuellen Einflussgrößen erfassen und dem CPU-Modul 4 übermitteln. Selbstverständlich können ohnehin vorhandene Sensoren, welche zur Erfassung von Prozessgrößen vorgesehen sind, genutzt werden. Für den Fall, dass z. B. der Sensor 9 die Temperatur eines Heizkessels erfasst, kann diese gemessene Größe für die Berechnung der MTBF und der Brauchbarkeitsdauer dieses Sensors vorgesehen werden. Im vorliegenden Ausführungsbeispiel weisen das Automatisierungsgerät 8 und die Aktoren 10, 11 Sensoren 13 auf, welche zur Erfassung der Temperatur, der Feuchtigkeit und/oder sonstiger physikalischer Größen vorgesehen sind. Darüber hinaus weisen die Komponenten jeweils einen Betriebsstundenzähler auf, welcher auf die jeweilige Einsatzdauer der Komponenten unter diesen aktuellen Einflussgrößen hinweist. Die von den Sensoren 9, 13 erfassten und dem CPU-Modul 4 über geeignete Kommunikationsverbindungen übermittelten Einflussgrößen verarbeitet ein Software-Baustein 14 des CPU-Moduls 4 und ermittelt aufgrund dieser Größen für jede der Komponenten 4 bis 7, 9 bis 11 und für das Automatisierungsgerät 8 aktualisierte Werte im Hinblick auf die mittlere Betriebsdauer und die jeweilige restliche Brauchbarkeitsdauer. Diese aktualisierten Werte oder diesen Werten entsprechende Angaben hinterlegt das CPU-Modul 4 wiederum in die Speicher 12 der jeweiligen Komponenten 4 bis 7, 9 bis 11, wobei ferner mittels des Software-Bausteins 14 oder des Software-Werkzeugs des Engineering-Systems 1 aus diesen Werten eine aktualisierte Vorhersage einer bevorstehenden Funktionsbeeinträchtigung und/oder eines bevorstehenden Ausfalls der Komponenten und/oder der Automatisierungseinrichtung 2 eingeleitet wird.

Für den Fall, dass eine oder mehrere der Komponenten 4 bis 7, 9 bis 11 ausgebaut und in einer anderen Automatisierungseinrichtung eingesetzt werden, können die in den jeweiligen Speichern 12 hinterlegten Angaben berücksichtigt werden, um eine Vorhersage einer bevorstehenden Funktionsbeeinträchtigung und/oder eines bevorstehenden Ausfalls dieser anderen Automatisierungseinrichtung einzuleiten.

## Patentansprüche

1. Verfahren zum Betreiben einer Automatisierungseinrichtung (2), die mehrere Automatisierungskomponenten (4 bis 7, 9 bis 11) umfasst, wobei anhand mindestens einer der Automatisierungseinrichtung (2) zugänglichen Einflussgrößen, welche die mittlere Betriebsdauer zwischen Ausfällen und/oder die Brauchbarkeitsdauer mindestens einer der Automatisierungskomponenten beeinflusst, eine Vorhersage einer bevorstehenden Funktionsbeeinträchtigung und/oder eines bevorstehenden Ausfalls dieser mindestens einen Automatisierungskomponente (4 bis 7, 9 bis 11) und/oder der Automatisierungseinrichtung (2) abgeleitet wird, wobei die mindestens eine Einflussgröße während der Steuerung eines technischen Prozesses zyklisch oder zu vorgegebenen Zeiten erfasst wird, **dadurch gekennzeichnet, dass** in der mindestens einen Automatisierungskomponente (4 bis 7, 9 bis 11) Angaben hinterlegt werden, welche die mittlere Betriebsdauer zwischen Ausfällen und/oder die Brauchbarkeitsdauer der Automatisierungskomponente (4 bis 7, 9 bis 11) repräsentieren, und dass in definierten Zeitabständen die Angaben aufgrund der mindestens einen Einflussgröße aktualisiert werden.

2. Verfahren nach Anspruch 1, **dadurch gekennzeichnet, dass** als Einflussgröße eine physikalische Größe in Form von Temperatur, Druck oder Luftfeuchtigkeit oder die Änderungsgeschwindigkeit dieser Größen erfasst wird.

3. Verfahren nach Anspruch 1 oder 2, **dadurch gekennzeichnet, dass** zur Vorhersage der bevorstehenden Funktionsbeeinträchtigung und/oder des bevorstehenden Ausfalls der mindestens einen Automatisierungskomponente (4 bis 7, 9 bis 11) deren Lagerhaltungsdauer berücksichtigt wird.

4. Automatisierungseinrichtung, welche zur Steuerung eines technischen Prozesses vorgesehen und mit mehreren Automatisierungskomponenten (4 bis 7, 9 bis 11) versehen ist, wobei während des Steuerbetriebs die Automatisierungseinrichtung (2) mindestens eine Einflussgröße zyklisch oder zu vorgegebenen Zeiten erfasst, welche die mittlere Betriebsdauer zwischen Ausfällen und/oder die Brauchbarkeitsdauer mindestens einer der Automatisierungskomponenten (4 bis 7, 9 bis 11) beeinflusst, und wobei die Automatisierungseinrichtung (2) ausgebildet ist, aufgrund der mindestens einen Einflussgröße eine Vorhersage einer bevorstehenden Funktionsbeeinträchtigung und/oder eines bevorstehenden Ausfalls dieser Automatisierungskomponente (4 bis 7, 9 bis 11) und/oder der Automatisierungseinrichtung (2) abzuleiten, **dadurch gekennzeichnet, dass** die Automatisierungseinrichtung (2) dazu ausgebildet ist, in der mindestens einen Automatisierungskomponente (4 bis 7, 9 bis 11) Angaben zu hinterlegen, welche die mittlere Betriebsdauer zwischen Ausfällen und/oder die Brauchbarkeitsdauer dieser Automatisierungskomponente (4 bis 7, 9 bis 11) repräsentieren, und ferner dazu ausgebildet ist, in definierten Zeitabständen die Angaben aufgrund der mindestens einen Einflussgröße zu aktualisieren.

5. Automatisierungseinrichtung nach Anspruch 4, **dadurch gekennzeichnet, dass** die Automatisierungseinrichtung (2) als Einflussgröße eine physikalische Größe in Form von Temperatur, Druck oder Luftfeuchtigkeit oder die Änderungsgeschwindigkeit dieser Größen erfasst.

6. Automatisierungseinrichtung nach Anspruch 4 oder 5, **dadurch gekennzeichnet, dass** die Automatisierungseinrichtung (2) dazu ausgebildet ist, zur Vorhersage der bevorstehenden Funktionsbeeinträchtigung und/oder des bevorstehenden Ausfalls der mindestens einen Automatisierungskomponente (4 bis 7, 9 bis 11) deren Lagerhaltungsdauer zu berücksichtigen.
